# EUROPEAN PATENT SPECIFICATION

(11) **EP 2 538 730 B1**
(45) Date of publication and mention of the grant of the patent: **26.08.2015**
(21) Application number: 12162059.5
(22) Date of filing: 29.03.2012
(51) Int. Cl.: H04W 48/20

(54) **Method for controlling network connection of wireless network device and associated wireless network device**
Verfahren zur Steuerung des Netzwerkanschlusses einer drahtlosen Netzwerkvorrichtung und zugehörige drahtlose Netzwerkvorrichtung
Procédé de contrôle de la connexion au réseau de dispositif de réseau sans fil et dispositif de réseau sans fil associé

(30) Priority: 24.06.2011 US 201161500623 P; 09.12.2011 TW 100145525
(43) Date of publication of application: 26.12.2012
(73) Proprietor: Acer Incorporated, New Taipei City 221 (TW)
(72) Inventor: Lin, Yung-Sen, New Taipei City 221 (TW); Chuang, Tzu-Lung, New Taipei City 221 (TW)
(74) Representative: Becker Kurig Straus

(56) References cited:
- EP-A1- 2 337 312
- US-A1- 2005 107 088
- US-A1- 2005 148 332
- US-A1- 2008 247 344
- US-A1- 2009 124 284
- US-A1- 2009 221 287

## Description

### Field of the Invention

The present invention relates to a method for controlling a wireless network device to quickly establish a link after being woken up from a sleep mode and an associated wireless network device according to the pre-characterizing clauses of claims 1 and 4, respectively.

### Background of the Invention

When a notebook or other mobile communication device enters a sleep mode, its network will be disconnected to save power. After the notebook is woken up from the sleep mode, the network connection will be re-established. During the re-establishment process, the notebook needs to scan all neighboring access points, and compare these neighboring access points in order to select one access point for establishing a link. Because these steps may take from 1 to 8 seconds, a certain amount of time is wasted before a user can begin to use the network.

US 2005/0148332 (Buckley et al.) discloses an apparatus and an associated method for facilitating selection of with which wireless local area network, or other network, that a mobile node should attempt to communicate. A plurality of listings are maintained at storage entities embodied at, or otherwise accessible by, a mobile node. The listings are accessed, in sequence, and entries contained in the listings are compared with networks in whose coverage areas that the mobile node is positioned. Communications are attempted to be effectuated, if possible, with networks in whose coverage area that the mobile node is positioned and whose identities are stored at the first-access listing.

US 2005/0107088 (Oura) discloses a station that divides all channels (CHs) available for assignment to an AP into a plurality of groups. CHs being included in one group are checked to determine whether or not there exists an AP that uses each of the CHs included in one group, based on an instruction of background scan from an OS and the like. Further, for CHs being included in the next group, the station checks whether or not there exists an AP that uses each of the CHs included in the next group based on the next instruction of background scan from an OS. As a result, the time required for one background scan can be reduced so as to have less impact on the communication the station is performing.

### Summary of the Invention

This in mind, the invention aims at providing a solution to the above-mentioned problem.

This is achieved by a method for controlling a wireless network device to quickly establish a link after being woken up from a sleep mode and an associated wireless network device according to claims 1 and 4, respectively.

The dependent claims pertain to corresponding further developments and improvements.

In the following, the invention is further illustrated by way of example, taking reference to the following drawings. Thereof:
FIG. 1 is a diagram illustrating a wireless network device according to another embodiment of the present invention;
FIG. 2 is a flowchart of a method for controlling a network connection of the wireless network device according to another embodiment of the present invention;
FIG. 3 is a flowchart of a detail of the Step S704 shown in FIG. 2; and
FIG. 4 is a diagram illustrating timing of the operating steps of the operating system, wireless network driver and network component shown in FIG. 3.

### Detailed Description

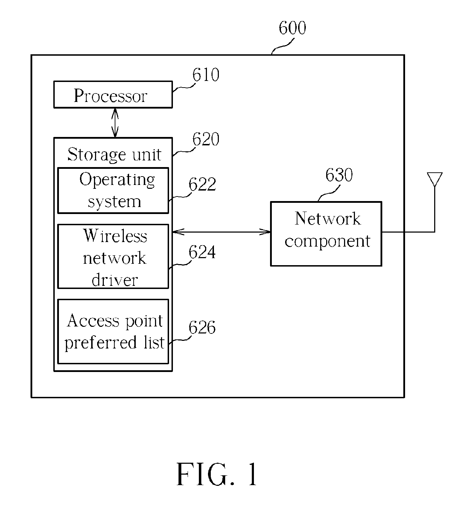

Please refer to FIG. 1, which illustrates a wireless network device 600 according to another embodiment of the present invention. As shown in FIG. 1, the wireless network device 600 includes a processor 610, a storage unit 620 and a network component 630, where the storage unit 620 stores an operating system 622, a wireless network driver 624 and an access point preferred list 626, where the access point preferred list 626 comprises connection records of the wireless network device 600; that is, a plurality of access points connected to the wireless network device 600 before. In addition, in this embodiment, the wireless network device 100 can be a notebook, a tablet computer or any other mobile communication device having a wireless network function.

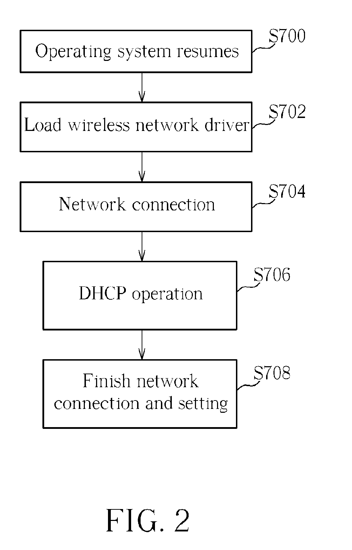

Please refer to FIG. 1 and FIG. 2 together. FIG. 2 is a flowchart of a method for controlling a network connection of the wireless network device 600 according to one embodiment of the present invention. Referring to FIG. 2, the flow is described as follows.

In Step S700, the wireless network device 600 is woken up from a sleep mode, and the operating system 622 resumes. Then, in Step S702, the operating system 622 loads the wireless network driver 624. In Step S704, the wireless network device 600 starts the network connection. Then, in Step S706, the wireless network device 600 performs a dynamic host configuration protocol (DHCP) operation to obtain an IP address. Finally, the flow enters Step S708 to finish the network connection and setting.

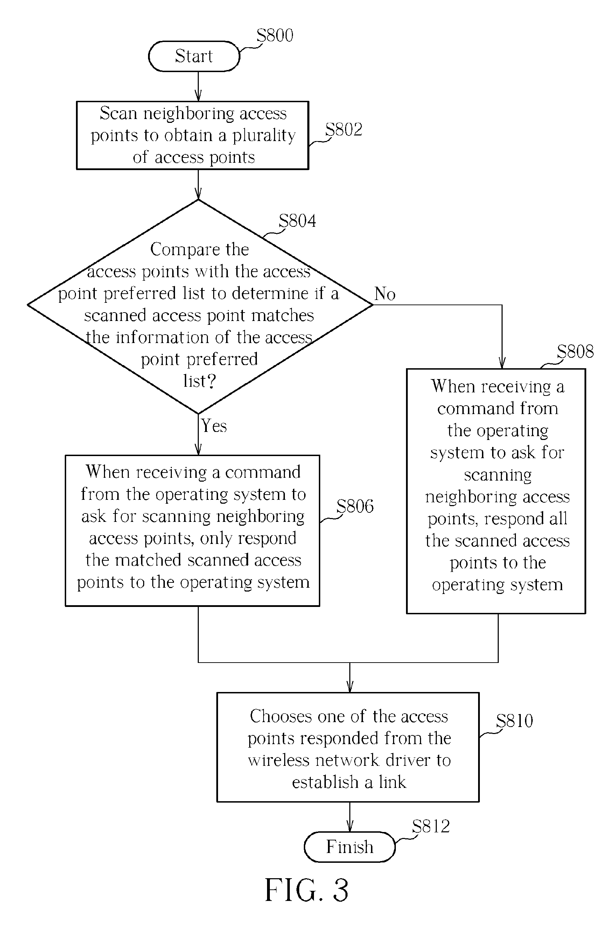

Please refer to FIG. 3, which is a flowchart of a detail of the Step S704. It is noted that, provided the results are substantially the same, the steps are not limited to be executed according to the exact order shown in FIG. 3. Referring to FIG. 3, the flow is described as follows.

In Step S800, the flow starts. Then, in Step 802, the wireless network driver 624 directly scans neighboring access points to obtain information of a plurality of access points. In Step S804, the wireless network driver 624 compares the scanned access points with the access point preferred list 626 to determine if at least a portion of the scanned access points match the information of the access point preferred list 626. If yes, the flow enters Step S705; and if not, the flow enters Step S808. In Step S806, when the wireless network driver 624 receives a command from the operating system 622 to ask for scanning access points, the wireless network driver 624 only responds with the portion of the scanned access points to the operating system 622. For example, assuming that ten access points are searched but only two access points are listed in the access point preferred list 626, then the wireless network driver 624 only responds with these two access points to the operating system 622, and does not respond with the other eight access points. In Step S808, when the wireless network driver 624 receives a command from the operating system 622 to ask for scanning neighboring access points, the wireless network driver 624 responds with all the scanned access points to the operating system 622. Then, in Step S810, the operating system 622 chooses one of the access points responded from the wireless network driver 624 to establish a link. Finally, the flow enters Step S812 to finish the flow.

Referring to the flow shown in FIG. 3, when at least a portion of the scanned access points match the information of the access point preferred list 626, the wireless network driver 624 only responds with a portion of the scanned access points and does not respond with all the scanned access points. Therefore, the operating system 622 needs less time to compare the access points (Step S810). The whole flow can be finished within about 1 second. Therefore, compared with the prior art 1 - 8 seconds connection time, the present invention speeds up the network connection time after the wireless network device 600 is woken up from the sleep mode.

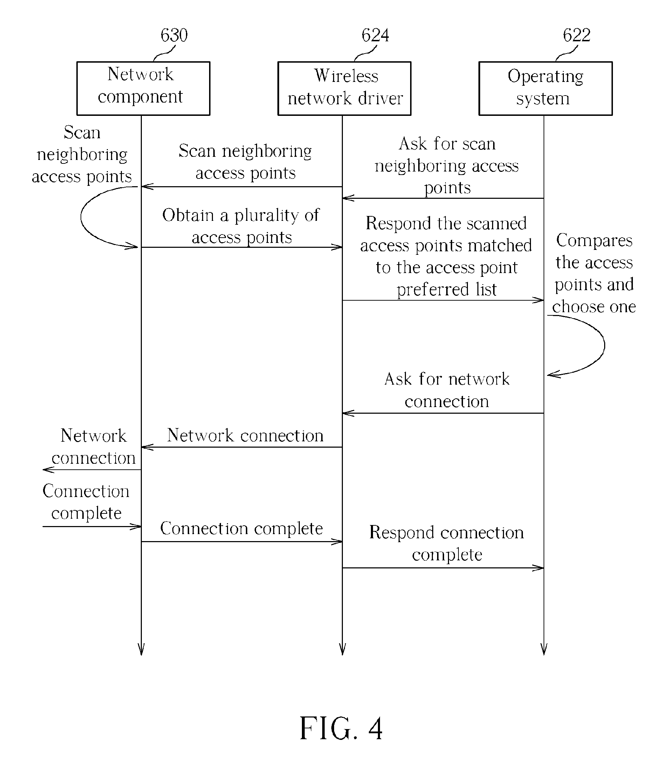

FIG. 4 is a diagram illustrating timing of the above operating steps of the operating system 622, wireless network driver 624 and network component 630.

Briefly summarized, in the method for controlling a network connection of a wireless network device and associated wireless network device of the present invention, the wireless network driver can respond with only a portion of access points to the operating system to decrease the loading of the operating system. Therefore, the wireless network device can quickly establish a link after being woken up from a sleep mode, and the user can use the network without having to wait a long time.

## Claims

1. A method for controlling a network connection of a wireless network device (600), the method being **characterized by** comprising:
after the wireless network device (600) is woken up from a sleep mode:
loading a wireless network driver (624);
utilizing the wireless network driver (624) to scan neighboring access points to obtain a plurality of access points;
utilizing the wireless network driver (624) to compare the plurality of access points with an access point preferred list (626); and further comprising:
when the wireless network driver (624) receives a command from an operating system (622) to ask for scanning the neighboring access points, and at least a portion of scanned access points are in the access point preferred list (626), only responding with the portion of scanned access points to the operating system (622); and
choosing one access point from among the portion of scanned access points, and sending the chosen access point to the wireless network driver (624) by the operating system (600) to establish a link.

2. The method of claim 1, further **characterized by**:
when none of the plurality of access points is in the access point preferred list (626), responding with all the plurality of access points to the operating system (622).

3. The method of claim 1, further **characterized by**:
before the wireless network device (600) enters the sleep mode, creating the access point preferred list (626) according to a plurality of connection records of the wireless network device (600).

4. A wireless network device (600), comprising:
a storage unit (620), for storing an operating system (622) and a wireless network driver (624); and
a network component (630);
**characterized in that** after the wireless network device (600) is woken up from a sleep mode, the operating system (622) is adapted to load the wireless network driver (624); the wireless network driver (624) is adapted to scan neighboring access points to obtain a plurality of access points; the wireless network driver (624) is adapted to compare the plurality of access points with an access point preferred list (626); when the wireless network driver (624) receives a command from the operating system (622) to ask for scanning the neighboring access points, and at least a portion of scanned access points are in the access point preferred list (626), the wireless network driver (624) is adapted to only respond with the portion of scanned
access points to the operating system (622); and the operating system (622) is further adapted to choose one access point from among the portion of scanned access points, and send the chosen access point to the wireless network driver (624) to establish a link via the network component (630).

5. The wireless network device (600) of claim 4, **characterized in that** when none of the plurality of access points is in the access point preferred list (626), the wireless network driver (624) is adapted to respond with all the plurality of access points to the operating system (622).

6. The wireless network device (600) of claim 4, **characterized in that** before the wireless network device (600) enters the sleep mode, the wireless network driver (624) is adapted to create the access point preferred list (626) according to a plurality of connection records of the wireless network device (600).

## Patentansprüche

1. Verfahren zum Steuern einer Netzwerkverbindung einer Drahtlosnetzwerk-Vorrichtung (600), wobei das Verfahren **dadurch gekennzeichnet ist, dass** es umfasst:
Nachdem die Drahtlosnetzwerk-Vorrichtung (600) aus einem Schlafmodus geweckt wurde:
Laden eines Drahtlosnetzwerk-Treibers (624);
Nutzen des Drahtlosnetzwerk-Treibers (624), um benachbarte Zugangspunkte zu suchen, um mehrere Zugangspunkte zu erhalten;
Nutzen des Drahtlosnetzwerk-Treibers (624), um die mehreren Zugangspunkte mit einer Liste bevorzugter Zugangspunkte (626) zu vergleichen;
und weiter umfassend:
Wenn der Drahtlosnetzwerk-Treiber (624) einen Befehl von einem Betriebssystem (622) empfängt, der fordert, nach benachbarten Zugangspunkten zu suchen, und mindestens ein Teil der gesuchten Zugangspunkte auf der Liste bevorzugter Zugangspunkte (626) steht, dem Betriebssystem (622) nur mit dem Teil der gesuchten Zugangspunkte zu antworten; und
Auswählen eines Zugangspunkts aus dem Teil der gesuchten Zugangspunkte, und Senden des ausgewählten Zugangspunkts durch das Betriebssystem (600) an den Drahtlosnetzwerk-Treiber (624), um eine Verbindung aufzubauen.

2. Verfahren nach Anspruch 1, weiter **gekennzeichnet durch**:
Wenn keiner der mehreren Zugangspunkte auf der Liste bevorzugter Zugangspunkte (626) steht, dem Betriebssystem (622) mit allen der mehreren Zugangspunkte zu antworten.

3. Verfahren nach Anspruch 1, weiter **gekennzeichnet durch**:
Bevor die Drahtlosnetzwerk-Vorrichtung (600) in den Schlafmodus eintritt, Erzeugen der Liste bevorzugter Zugangspunkte (626) gemäß mehrerer Verbindungs-Aufzeichnungen der Drahtlosnetzwerk-Vorrichtung (600).

4. Drahtlosnetzwerk-Vorrichtung (600), umfassend:
Eine Speichereinheit (620) zum Speichern eines Betriebssystems (622) und eines Drahtlosnetzwerk-Treibers (624); und
Eine Netzwerkkomponente (630);
**dadurch gekennzeichnet, dass**, nachdem die Drahtlosnetzwerk-Vorrichtung (600) aus einem Schlafmodus geweckt wurde, das Betriebssystem (622) angepasst ist, den Drahtlosnetzwerk-Treiber (624) zu laden; der Drahtlosnetzwerk-Treiber (624) angepasst ist, benachbarte Zugangspunkte zu suchen, um mehrere Zugangspunkte zu erhalten; wobei der Drahtlosnetzwerk-Treiber (624) angepasst ist, die mehreren Zugangspunkte mit einer Liste bevorzugter Zugangspunkte (626) zu vergleichen; wobei, wenn der Drahtlosnetzwerk-Treiber (624) einen Befehl von dem Betriebssystem (622) empfängt, der fordert, nach den benachbarten Zugangspunkten zu suchen, und mindestens ein Teil der gesuchten Zugangspunkte auf der Liste bevorzugter Zugangspunkte (626) steht, der Drahtlosnetzwerk-Treiber (624) angepasst ist, dem Betriebssystem (622) nur mit dem Teil der gesuchten Zugangspunkte zu antworten; und wobei das Betriebssystem (622) weiter angepasst ist, einen Zugangspunkt aus dem Teil der gesuchten Zugangspunkte auszuwählen und den ausgewählten Zugangspunkt an den Drahtlosnetzwerk-Treiber (624) zu senden, um über die Netzwerkkomponente (630) eine Verbindung aufzubauen.

5. Drahtlosnetzwerk-Vorrichtung (600) nach Anspruch 4, **dadurch gekennzeichnet, dass**:
Wenn keiner der mehreren Zugangspunkte auf der Liste bevorzugter Zugangspunkte (626) steht, der Drahtlosnetzwerk-Treiber (624) angepasst ist, dem Betriebssystem (622) mit allen der mehreren Zugangspunkte zu antworten.

6. Drahtlosnetzwerk-Vorrichtung (600) nach Anspruch 4, **dadurch gekennzeichnet, dass**:
Bevor die Drahtlosnetzwerk-Vorrichtung (600) in den Schlafmodus eintritt, der Drahtlosnetzwerk-Treiber (624) angepasst ist, die Liste bevorzugter Zugangspunkte (626) gemäß mehrerer Verbindungs-Aufzeichnungen der Drahtlosnetzwerk-Vorrichtung (600) zu erzeugen.

## Revendications

1. Procédé de commande d'une connexion réseau d'un dispositif réseau sans fil (600), le procédé étant **caractérisé en ce qu'**il comprend :
après que le dispositif réseau sans fil (600) est réveillé depuis un mode veille :
le chargement d'un pilote de réseau sans fil (624) ;
l'utilisation du pilote de réseau sans fil (624) pour balayer les points d'accès voisins pour obtenir une pluralité de points d'accès ;
l'utilisation du pilote de réseau sans fil (624) pour comparer la pluralité de points d'accès à une liste préférée de points d'accès (626) ;
et comprenant en outre :
lorsque le pilote de réseau sans fil (624) reçoit une commande de la part d'un système d'exploitation (622) pour demander le balayage des points d'accès voisins et qu'au moins une partie des points d'accès balayés sont dans la liste préférée de points d'accès (626), la réponse uniquement avec la partie de points d'accès balayés au système d'exploitation (622) ; et
le choix d'un point d'accès parmi la partie de points d'accès balayés, et l'envoi du point d'accès choisi au pilote de réseau sans fil (624) par le système d'exploitation (600) pour établir une liaison.

2. Procédé selon la revendication 1, **caractérisé en outre par** :
lorsqu'aucun point d'accès parmi la pluralité de points d'accès n'est dans la liste préférée de points d'accès (626),
la réponse avec toute la pluralité de points d'accès au système d'exploitation (622).

3. Procédé selon la revendication 1, **caractérisé en outre par** :
avant que le dispositif réseau sans fil (600) n'entre dans le mode veille, la création de la liste préférée de points d'accès (626) selon une pluralité d'enregistrements de connexion du dispositif réseau sans fil (600).

4. Dispositif réseau sans fil (600), comprenant : une unité de stockage (620), pour stocker un système d'exploitation (622) et un pilote de réseau sans fil (624) ; et
un composant réseau (630) ;
**caractérisé en ce qu'**après que le dispositif réseau sans fil (600) est réveillé depuis un mode veille, le système d'exploitation (622) est adapté pour charger le pilote de réseau sans fil (624) ; le pilote de réseau sans fil (624) est adapté pour balayer les points d'accès voisins pour obtenir une pluralité de points d'accès ; le pilote de réseau sans fil (624) est adapté pour comparer la pluralité de points d'accès à une liste préférée de points d'accès (626) ; lorsque le pilote de réseau sans fil (624) reçoit une commande de la part du système d'exploitation (622) pour demander le balayage des points d'accès voisins, et qu'au moins une partie des points d'accès balayés sont dans la liste préférée de points d'accès (626), le pilote de réseau sans fil (624) est adapté pour répondre uniquement avec la partie de points d'accès balayés au système d'exploitation (622) ; et le système d'exploitation (622) est en outre adapté pour choisir un point d'accès parmi la partie de points d'accès balayés, et envoyer le point d'accès choisi au pilote de réseau sans fil (624) pour établir une liaison par l'intermédiaire du composant réseau (630).

5. Dispositif réseau sans fil (600) selon la revendication 4, **caractérisé en ce que**, lorsqu'aucun point d'accès parmi la pluralité de points d'accès ne se trouve dans la liste préférée de points d'accès (626), le pilote de réseau sans fil (624) est adapté pour répondre avec tous les points d'accès de la pluralité au système d'exploitation (622).

6. Dispositif réseau sans fil (600) selon la revendication 4, **caractérisé en ce qu'**avant que le dispositif réseau sans fil (600) n'entre dans le mode veille, le pilote de réseau sans fil (624) est adapté pour créer la liste préférée de points d'accès (626) selon une pluralité d'enregistrements de connexion du dispositif réseau sans fil (600).
